# EUROPEAN PATENT SPECIFICATION

(11) **EP 3 325 416 B1**
(45) Date of publication and mention of the grant of the patent: **09.10.2019**
(21) Application number: 16745077.4
(22) Date of filing: 20.07.2016
(51) Int. Cl.: C03C 3/064, C03C 1/04, C23D 3/00, C23D 5/00, C03C 3/066, C03C 8/08, C03C 17/04

(54) **METHOD FOR PROVIDING A CO- AND NI-FREE VITREOUS ENAMELLED METAL COATED STEEL SUBSTRATE AND A PRIMER COMPOSITION THEREFOR**
VERFAHREN ZUR BEREITSTELLUNG EINES CO- UND NI-FREIEN GLASIERTEN METALLBESCHICHTETEN STAHLSUBSTRATS UND GRUNDIERUNGSZUSAMMENSETZUNG DAFÜR
PROCÉDÉ DE FABRICATION D'UN SUBSTRAT EN ACIER REVÊTU DE MÉTAL ÉMAILLÉ DÉPOURVU DE CO ET DE NI ET COMPOSITION DE PRIMAIRE À CET EFFET

(30) Priority: 24.07.2015 NL 2015222
(43) Date of publication of application: 30.05.2018
(73) Proprietor: Onderzoekscentrum voor Aanwending van Staal N.V., 9060 Zelzate (BE)
(72) Inventor: DE STRYCKER, Joost Remi Margueritte, 9060 Zelzate (BE); LEVEAUX, Marc Henri André, 9060 Zelzate (BE); KNOCKAERT, Pierre Claude Victor, 9060 Zelzate (BE)
(74) Representative: EP&C
(86) International application number: PCT/EP2016/067293
(87) International publication number: WO 2017/016952

(56) References cited:
- EP-A1- 1 190 994
- EP-A1- 2 662 339
- WO-A2-98/28236
- RU-C1- 2 013 403
- RU-C2- 2 207 992
- DATABASE WPI Week 199831 Thomson Scientific, London, GB; AN 1998-357253 XP002758261, -& JP H10 139476 A (NIPPON FERRO KK) 26 May 1998 (1998-05-26)

## Description

### Technical Field

The invention relates to a method for providing a metal coated steel substrate with a coating of a primer composition that is substantially Co- and Ni-free primer for a vitreous enamel coating. The primer coating is particularly suitable for articles having enamel multilayer coating, comprising one or more primer layers and one or more topcoat layers, applied onto a metal coated steel substrate. It also relates to the enamelled articles and pre-enamelled articles, i.e., intermediate articles provided with the primer composition and/or the topcoat composition, that still need to undergo a (final) vitrification step.

### Background Art

Enamels are complex oxide glass compositions, referred to as enamel or glass frits, and obtained by melting minerals and quenching the melt. The product is grinded and applied in powder form or slurry onto the metal surface. A vitrification step carried out at high temperature ensures the formation of the glass film and the glass to metal link. Commonly, enamels comprise of one or more glass forming oxides, e.g., oxides selected from one or more of the following: P₂O₅, SiO₂, TiO₂, V₂O₅, B₂O₃, Cr₂O₃, and ZnO; one or more glass modifying oxides, e.g. K₂O, Li₂O and/or Na₂O, and other oxides. The formulation is typically selected such that the eutectic (minimum melting point of the mixture) is about 150 to 200°C below the vitrification temperature range. Enamel or glass frits are therefore different from mineral pigments and mineral fillers, that may also be based on oxides, but do not participate in the eutectic (e.g. fillers and pigments are typically oxides in crystallized form). The glass to metal link is often obtained through the use of specific ingredients in the glass composition. On steel, the conventional so called bonding oxides are mainly CoO and NiO. Their use will be restricted soon by REACH process in Europe, so alternative compositions are desired.

Vitreous enamel coatings are widely used on steel objects to protect the steel object against the actions of a variety of both organic and inorganic chemicals. Vitreous enamel coatings are also known to be corrosion resistant, heat resistant and scratch resistant. Vitreous enamel coatings are available in a wide range of colours and can thus be used for their aesthetic properties in decoration and architecture for example. The coatings tend to be smooth and are generally easily applied onto the steel object. Vitreous enamel coatings can be cleaned easily and are also known to be very durable. Objects on which vitreous enamel coatings are applied include white goods and household appliances, such as cooking hobs, hob tops, front panels and doors of free standing cookers, microwaves and oven cavities, tumble driers, washing machine drums, free standing heating devices, heat reflectors, barbecues, whiteboards, roof tiles, pots and pans, corrugated panels for heat exchangers, panels for cladding, roofing, advertising, boilers and electric water heaters, washing basins, bath tubs, shower trays and many others.

The enameling process is a post treatment, meaning that the glass in powder form is applied as a single or multitude of layers onto the surface of a steel object once the latter has been shaped. To ensure adequate protection, relatively thick layers of glass of about 100 µm (average) must be applied. As a consequence, enamel layers may induce, in combination with the temperature, deformations of the steel object.

In the past, enamels have been applied on a large variety of metals and alloys including aluminium, carbon steel, stainless steel, cast iron, copper, silver, etc. However, each metal or alloy requires specifically designed enamels to ensure adherence between the enamel and the metal substrate and to offer the adequate surface functionalities to the coated articles. Often these two functions are decoupled by using a 2-coat system composed of (i) a so-called ground enamel, herein referred to as a primer, ensuring the adhesion and (ii) a topcoat enamel ensuring surface functionalities like colour, chemical resistance, etc.

The enamelling process basically consists in applying a layer or multitude of layers of glass powders, obtained from so-called glass frits, on an adequately prepared metal surface. The system is subsequently fired at high temperature in such a way that the layer(s) of glass powders melts to wet the surface. During the firing, and depending on the appropriate selection of the coating composition, glass will chemically react with the substrate to ensure a proper binding of the enamel layer to the substrate.

Enamelling typically consists in applying layers of metal oxide glass compositions onto metal surfaces and vitrifying (firing) them at high temperature. Depending on the substrate, the firing temperature may vary. Typically:
- Enamelling of aluminium alloys and aluminized steel at temperatures from 500 to 600°C
- Enamelling of cast iron at temperatures from 750°C to 820°C
- Enamelling of steel at temperatures from 760 to 860°C.
Enamel layers are typically relatively thick: e.g., 25 to 100 µm per layer applied, and can be up to 3 layers or more. Enamelled steels are fired at temperatures ranging from 780 to 850°C. A disadvantage of the high temperature firing of carbon steels is the possible appearance of a defect called "fish scales".

A way to decrease the firing temperature of enamelled carbon steel is to use enamels developed for aluminium substrates. These are typically fired at about 550°C. However, as these enamels do not adhere properly to steel surfaces, it is necessary to precoat the steel surface with an aluminium coating and to subsequently enamel this aluminised steel.

Such practice is for example described in EP 453897 describing Co and Cu-containing enamels for self cleaning (i.e. catalytic cleaning) of ovens, wherein the firing temperature for aluminium and aluminized steel is 540°C. The low temperature for firing the vitreous enamel coating on aluminized steel is confirmed in EP 0931772, wherein a specific catalytic enamel coating composition is described in order to obtain an improved cleanability. Firing temperatures of 500 to about 650°C, in particular 500 to 600°C, are described. In US 4460630, the firing of vitreous enamel layers on mild steel is done at a temperature in the range of 780 to 820 °C. However, when the substrate is an aluminized steel sheet the firing temperature is in the range of 520 to 600 °C. This temperature is relatively low. As surface properties of enamels are directly linked to the vitrification temperature, such systems have limited performances.
Enamelling of other metal coated steels has also been proposed, mainly to modify the adherence mechanism. Classically adherence promoters are added to enamels for carbon steel. EP 0964078 indicates that adherence improving metal oxides are the oxides of cobalt, nickel, antimony and manganese. From US 6517904 it is known that copper oxide is used to improve the adherence of a vitreous enamel composition to an aluminium-containing surface. However, some of these oxides (nickel oxide in particular) are now considered unsafe and are increasingly avoided in enamel compositions. In EP 0964078 it is described that substrates that comprise a zinc alloy-containing surface, are coated with a vitreous enamel composition that comprises none of the oxides of Co, Ni, Cu, Sb or Mn, but that comprises in addition to common enamel components such as boron oxide, silicon oxide, alkali metal oxides, and phosphorus oxide, less than 1% by weight of aluminium oxide. The firing temperature of this enamelled zinc alloy coated steel is in the range of 700 to 900°C.

The occurrence of the issue of fish scales has been mentioned in e.g. US 4348229, which describes this phenomenon in enamelled steel that is obtained by a double enamel firing. The effect is ascribed to the effect of hydrogen absorbed in the steel. Allegedly, the presence of boron and nitrogen in the steel composition should improve the resistance to the occurrence of fish scales.

Fish scale formation is a temperature dependent process. With the relative low firing temperatures that are mentioned in EP 0931772 this may not occur or to a lesser extent. However, if firing temperatures are increased the problem of fish scale formation may become prominent. This means that the firing temperatures for the vitreous enamel coating that are disclosed in EP 0964078 and that range from 700 to 900°C, may incur a fish scale problem, although the occurrence thereof has not been mentioned for the firing temperatures of the examples of disclosed in EP 0964078.

JP-H-10139476 disclosed a method for producing a metal coated steel substrate with a primer composition that comprises Sb₂O₃ and MoO₃.

There is a need for a process wherein steel may be coated with an enamel composition wherein a good adherence and adequate surface properties are obtained and that is substantially Co an Ni-free. There is a further need in the art for the enamelling of wider ranges of steel.

However, there is a further challenge in the art. While it may be possible to apply a primer coating on metal coated steel, the primer coating should be compatible for topcoat enamels that are applied on top of it. Compatibility means that that a bilayer system ( primer + topcoat) is adherent to the metallic coated steel and that the surface quality and aspect of the top coat is maintained. Thus, the coating composition for the primer should be such that the primer coating adheres well at relatively low temperatures onto metal coated steel, without subsequent problems when applying a topcoat enamel, resulting in an enamel layer that has sufficient opacity. It has now been found that this can be obtained by the present invention.

### Summary of the invention

Accordingly, the present invention provides a method for producing a metal coated steel substrate with a coating of a primer composition that, when fired, the resulting enamel expresses a good adherence to the metal coated steel substrate. The primer composition used in the method is suitable for application onto a metal coated steel substrate. The primer composition on the metal coated steel substrate can be subjected to vitrification at a temperature in the range of 650 to 750 °C. The method of the invention allows the use of the primer composition on a wide variety of metal coated steels enabling that steels like carbon steel such as HSLA and microalloyed steels can be enamelled ,i.e ;steels considered not suitable for enamelling according to the norm EN 10209
The method according to invention for producing a metal coated steel substrate provided with a coating of a primer composition, comprises:
- applying a layer of the primer composition on the metal coated steel substrate, wherein the primer composition comprises
   - one or more basic components (B) selected from the group consisting of CuO, K₂O, Li₂O, Na₂O, CeO₂ and ZnO;
   - one or more components with intermediate acidity (IN) selected from the group consisting of Al₂O₃, B₂O₃, Cr₂O₃, SnO₂, Sb₂O₃ and Fe₂O₃;
   - one or more acidic components (A) selected from the group consisting of MnO₂, MoO₃, P₂O₅, SiO₂, TiO₂, V₂O₅, WO₃ and ZrO_{2;} and
   wherein all wt.% are drawn on the total primer composition and the total sum of the amounts excluding impurities and after normalization is 100 wt.%,
   wherein all components are expressed as oxides,
   wherein the sum of the amounts of CeO₂ + Cr₂O₃+ CuO + Fe₂O₃+ MnO₂+ MoO₃+ SnO₂ + Sb₂O₃ + V₂O₅ + WO₃ is between 18.9 and 48.6 wt.%, and wherein the sum of the amounts of CeO₂ + CuO + Fe₂O₃+ MoO₃+ SnO₂ + WO₃ is between 18.9 and 48.6 wt.%,
- and firing the metal coated substrate with the primer composition.

The primer composition used in the method of the invention comprises a relative large amount of a group of metals in comparison with the prior art compositions, most of which are transition metals, such that the composition comprises
- one or more basic components (B) selected from the group consisting of CuO, K₂O, Li₂O, Na₂O, CeO₂ and ZnO;
- one or more components with intermediate acidity (IN) selected from the group consisting of Al₂O₃, B₂O₃, Cr₂O₃, SnO₂, Sb₂O₃ and Fe₂O₃;
- one or more acidic components (A) selected from the group consisting of MnO₂, MoO₃, P₂O₅, SiO₂, TiO₂, V₂O₅, WO₃ and ZrO_{2;} and
wherein the sum of the amounts of CeO₂ + Cr₂O₃+ CuO + Fe₂O₃+ MnO₂+ MoO₃+ SnO₂ + Sb₂O₃ + V₂O₅ + WO₃ is between 18.9 and 48.6 wt.%, and wherein the sum of the amounts of CeO₂ + CuO + Fe₂O₃ + MoO₃ + SnO₂ + WO₃ is between 18.9 and 48.6 wt.% .
The primer composition used in the method of the invention is substantially free of Co and Ni, i.e. the amount of NiO and/or CoO is less than 0.1 wt.%. The primer composition of the method of the invention contains preferably less than 3 wt.% of impurities. The wt.% are drawn on the total primer composition and the total sum of the amounts excluding impurities and after normalization is 100 wt.%.

The invention also provides a method for producing an enamelled metal coated steel substrate, wherein the coated metal coated steel substrate produced by the method of the invention is vitrified by firing the provided layer of the topcoat composition at a temperature in the range of about 650 °C to about 750 °C.

Furthermore, then invention provides a primer composition comprising
- one or more basic components (B) selected from the group consisting of CuO, K₂O, Li₂O, Na₂O, and ZnO;
- one or more components with intermediate acidity (IN) selected from the group consisting of Al₂O₃, B₂O₃, Cr₂O₃, SnO₂, Sb₂O₃ and Fe₂O₃;
- one or more acidic components (A) selected from the group consisting of MnO₂, MoO₃, P₂O₅, SiO₂, TiO₂, V₂O₅, WO₃ and ZrO_{2;} and
wherein all wt.% are drawn on the total primer composition and the total sum of the amounts excluding impurities and after normalization is 100 wt.%,
wherein all components are expressed as oxides, wherein the sum of the amounts of CeO₂ + Cr₂O₃+ CuO + Fe₂O₃+ MnO₂+ MoO₃+ SnO₂ + Sb₂O₃ + V₂O₅ + WO₃ is between 18.9 and 48.6 wt.%, and wherein the sum of the amounts of CeO₂ + CuO + Fe₂O₃ + MoO₃ + SnO₂ + WO₃ is between 18.9 and 48.6 wt.% and the use of the primer composition in improving adherence and compatibility.

The invention further provides an article, comprising a metal coated steel substrate onto which the primer composition according to the invention is applied. The article can be vitrified or non-vitrified, i.e. can be in a pre-enamelled state as defined for instance in WO 2009087217 or in FR2784372)) or I an enamelled state and with or without a topcoat.

### Detailed description

The present invention is hence characterised in that, in addition to conventional enamel forming oxides, other metal oxides (transition metal oxides) are added to the primer composition. It was found that
- metal coated steel could be used instead of steel suitable for enamelling as defined in the norm EN 10209;
- the enamelling temperature could be reduced from 830°C (average) to about 720°C (average);
- the thickness of the enamel layer(s) could be substantially reduced;
- the glass to metal link could be transferred from the enamel onto the metal coated steel substrate, in the form of an organic- glass or ceramic layer, glass-ceramic layer as a primer;
- top coat enamels could be used that are designed for further vitrification at about 720°C and that can be applied on top of the primer, and which top coat enamels can be applied at a lower thickness than the state of the art.

In the art, enamelling compositions have been described in JP10-139476 that contain high amounts of Sb₂O₃ (16 wt.%) together with small amounts of MoO₃ (0.1-0.3 wt.%) for the enamelling of cast iron steel and plate steel. However, the present invention has a lowered preference for Sb₂O₃ in view of toxicity. Furthermore, the present invention focuses on (has a preference for) the use of metal-coated steel.

It was further found that steel grades normally not suited for enamelling could be used, such as non ELC nor ULC specific grades as defined in EN10209, being carbon steel grades, micro alloyed steel grades, quenchable steel grades, bake hardenable steel grades, high strength steel grades, hot formable steel grades etc.

Without being bound by theory, the present inventor considers that this is possible because of the metal coat on the steel, positioned between the steel and the primer compositions and topcoat (and their resulting enamel layer(s)), acts as a barrier to prevent:
- contact between the enamel layer(s), on the one hand and carbon from the steel on the other hand. A contact between an oxide glass and an iron-carbon alloy at high temperature would lead to initiate redox reactions, leading to the formation of gas-namely CO or CO₂, which would form bubbles in the enamel layer(s).
- diffusion-absorption of hydrogen from the firing atmosphere into the steel, of which it is known to have high affinity for hydrogen at high temperature. The absorption of hydrogen in steel is known to increase with temperature, and to become substantial above AC1 transition temperature in the iron-carbon phase diagram, attributed to the transformation of ferrite into austenite at this temperature and being the main cause of fish scales, because this transformation is reversible when cooling down.

So the metal coating on top of the steel acts twice as a barrier and avoids contact or diffusion of carbon towards the enamel and avoids hydrogen to diffuse into the steel.

Last but not least, enamelling of steel consists to associate a ductile material, being the steel, to a brittle one, glass like, being the enamel. This association forces to configure the system in a particular way, fixing the thermal expansion coefficient of the enamel at a lower value than the one of the steel. So, by cooling down the system, compressive stresses are generated in the enamel layer, and tensile stresses into the steel, which is the unique way to keep integrity of the enamel coating. Otherwise, the enamel layer would crack and would not protect the steel from corrosion anymore, But this concept has a drawback : thin sheets of steel deform (are bended by the enamel), the phenomenon being increased by the fact that the enamel layer is rather thick (deformations are proportional to the thickness of the coating).

The ranges expressed herein are by way of wt.%. The wt.% are drawn on the total of the primer composition, unless otherwise indicated. The whole composition is normalised at 100wt.%. The components are expressed as oxides. The oxides constituting the primer compositions and glass enamel compositions are grouped in 3 families, Basic oxides, Intermediate oxides (or Amphoteric oxides) and Acidic oxides. The definition of basic and acidic follows Lewis's concept for products solubilized in water. The oxides are grouped by their acidity and the individual amounts are defined in wt.% as oxide. The amounts of oxides are summed per group and the whole composition is normalized at 100 wt.%.

Impurities in terms of the present invention are preferably present in an amount of less than 3% by weight (drawn on the entire composition). Impurities are considered negligible for achieving a technical effect. Known impurities include one or more of F₂, BaO, CaO, MgO, and SrO. Rare earth elements may be found amongst the impurities too. Impurities are not taken into account in the normalised formulations presented here

The primer composition according to the present invention is preferably substantially free of cobalt and/or nickel oxide. By substantially free is understood an amount of the respective oxide of less than 0.1 wt.% by weight, preferably less than 0.05 wt.%.

### The primer composition

The primer composition of the present invention comprises
- one or more basic components (B) selected from the group consisting of CuO, K₂O, Li₂O, Na₂O, CeO₂ and ZnO;
- one or more components with intermediate acidity (IN) selected from the group consisting of Al₂O₃, B₂O₃, Cr₂O₃, SnO₂, Sb₂O₃ and Fe₂O₃; and
- one or more acidic components (A) selected from the group consisting of MnO₂, MoO₃, P₂O₅, SiO₂, TiO₂, V₂O₅, WO₃ and ZrO_{2;}
wherein all components are expressed as oxides, wherein the sum of the amounts of CeO₂ + Cr₂O₃+ CuO + Fe₂O₃+ MnO₂+ MoO₃ + SnO₂ + Sb₂O₃ + V₂O₅ + WO₃ is between 18.9 and 48.6 wt.% and wherein the sum of the amounts of CeO₂ + CuO + Fe₂O₃ + MoO₃ + SnO₂ + WO₃ is between 18.9 and 48.6 wt.%. All wt.% are drawn on the total primer composition and the total sum of the amounts excluding impurities and after normalization is 100 wt.%,

In a preferred embodiment the amount of NiO and/or CoO is less than 0.1 wt.%.

The sum of the amounts of CeO₂ + Cr₂O₃+ CuO + Fe₂O₃+ MnO₂+ MoO₃+ SnO₂ + V₂O₅ + WO₃ is between 18.9 and 48.6 wt.%. In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

By selecting the sum of the amounts of CeO₂ + CuO + Fe₂O₃+ MoO₃+ SnO₂ +, WO₃ between 18.9 and 48.6 wt.%.a primer composition is obtained that, when applied to a metal coated substrate provides a good adherence and a good compatibility.

In a preferred embodiment of the invention, the basic components (B) are present in a range of 16.2 to 58.3 wt.% in the primer composition having a good adherence and a good compatibility when applied to a metal coated substrate.

In a preferred embodiment of the invention, the Intermediate components (IN) are present in a range of 13.9 to 53.3 wt.% in the primer composition having a good adherence and a good compatibility when applied to a metal coated substrate.

In a preferred embodiment of the invention, wherein the acid components (A) are present in a range of 23.0 to 64.9 wt.% in the primer composition having a good adherence and a good compatibility when applied to a metal coated substrate.

In a further preferred embodiment of the invention, the basic components (B) are present in a range of 16.2 to 58.3 wt.%, the Intermediate components In are present in a range of 13.9 to 53.3 wt.%, and the acid components (A) are present in a range of 23.0 to 64.9 wt.% in the primer composition having a good adherence and a good compatibility when applied to a metal coated substrate.

In a further preferred embodiment of the invention having a good adherence and a good compatibility when applied to a metal coated substrate one or more basic components (B) are selected from the group consisting of:
a. CuO in an amount of 0.0 to 22.8 wt.%;
b. K₂O in an amount of 1.9 to 9.7 wt.%;
c. Na₂O in an amount of 8.6 to 22.2 wt.%;
d. ZnO in an amount of 0.0 to 5.0 wt.%; and
e. CeO₂ in an amount of 0.0 to 28.6 wt.%.

In a further preferred embodiment of the primer composition of the invention having a good adherence and a good compatibility, the one or more intermediate components In are selected from the group consisting of:
a. Al₂O₃ in an amount of 0.0 to 18.5 wt.%;
b. B₂O₃ in an amount of 1.6 to 28.6 wt.%;
c. Cr₂O₃ in an amount of 0.0 to 14.4 wt.%;
d. Sb₂O₃ in an amount of 0.0 to 33.4 wt.%;
e. SnO₂ in an amount of 0.0 to 28.6 wt.%; and
f. Fe₂O₃ in an amount of 0.0 to 27.9 wt.%
In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

In a further preferred embodiment of the primer composition of the invention having a good adherence and a good compatibility, the one or more acid components (A) are selected from the group consisting of:
a. MnO₂ in an amount of 0.0 to 13.4 wt.%;
b. MoO₃ in an amount of 0.1 to 1.2 wt.%;
c. P₂O₅ in an amount of 1.6 to 31.3 wt.%;
d. SiO₂ in an amount of 2.0 to 30.3 wt.%;
e. TiO₂ in an amount of 0.3 to 10.8 wt.%;
f. WO₃ in an amount of 0.0 to 9.1 wt.%; and
g. ZrO₂ in an amount of 0.0 to 8.4 wt.%.

Particularly preferred embodiments of this disclosure are those methods in which a primer composition is used as specified in Table 1 wherein the amount of CeO₂ + CuO + Fe₂O₃ + MoO₃ + SnO₂ + WO₃ is from 18.9 to 48.6 wt.%, preferably from 18.9 to 44.4 wt.%, and the amount of CeO₂ + Cr₂O₃ + CuO + Fe₂O₃ + MnO₂ + MoO₃ + Sb₂O₃ + SnO₂ + V₂O₅ + WO₃ is from 18.9 to 48.6 wt.%, preferably from 18.9 to 44.4 wt.%, and optionally with the other oxides within the ranges as in Table 1:

| Table 1 | Adherence | | Adherence | Opacity |
|---|---|---|---|---|
| | 3 | | 3 | 3 |
| WEIGHT % | | | A | |
| Oxide | From | To | From | To |
| CeO₂ + CuO + Fe₂O₃ + MoO₃ + SnO₂ + WO₃ | 0.1 | 48.6 | 0.1 | 44.4 |
| CeO₂ + Cr₂O₃ + CuO + Fe₂O₃ + MnO₂ + MoO₃ + Sb₂O₃ + SnO₂ + V₂O₅ + WO₃ | 0.1 | 48.6 | 16.6 | 44.4 |
| Al₂O₃ | 0.0 | 26.7 | 0.0 | 18.5 |
| B₂O₃ | 1.6 | 26.2 | 5.0 | 26.2 |
| CeO₂ | 0.0 | 28.6 | 0.0 | 28.6 |
| Cr₂O₃ | 0.0 | 19.4 | 0.0 | 14.4 |
| CuO | 0.0 | 22.7 | 0.0 | 22.8 |
| Fe₂O₃ | 0.0 | 33.3 | 0.0 | 27.9 |
| K₂O | 1.9 | 11.7 | 1.9 | 9.7 |
| Li₂O | 0.0 | 5.9 | 0.0 | 3.7 |
| MnO₂ | 0.0 | 28.6 | 0.0 | 28.6 |
| MoO₃ | 0.0 | 1.2 | 0.0 | 1.2 |
| Na₂O | 8.1 | 28.3 | 8.5 | 22.5 |
| P₂O₅ | 1.6 | 37.6 | 1.6 | 31.3 |
| Sb₂O₃ | 0.0 | 33.4 | 0.0 | 33.4 |
| SiO₂ | 1.9 | 44.6 | 2.0 | 31.0 |
| SnO₂ | 0.0 | 28.6 | 0.0 | 28.6 |
| TiO₂ | 0.3 | 28.4 | 0.3 | 10.8 |
| V₂O₅ | 0.0 | 19.5 | 0.0 | 19.5 |
| WO₃ | 0.0 | 9.1 | 0.0 | 9.1 |
| ZnO | 0.0 | 25.2 | 0.0 | 5.0 |
| ZrO₂ | 0.0 | 8.4 | 0.0 | 0.6 |

In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

As specified in the table 1, the primer composition expresses an average adherence (3) within certain ranges of oxides and an average adherence combined with an average opacity within certain preferred ranges.

Particularly preferred embodiments of this disclosure are those methods in which a primer composition is used as specified in Table 2 wherein the amount of CeO₂ + CuO + Fe₂O₃ + MoO₃ + SnO₂ + WO₃ is from 18.9 to 48.6 wt.%, and the amount of CeO₂ + Cr₂O₃ + CuO + Fe₂O₃ + MnO₂ + MoO₃ + Sb₂O₃ + SnO₂ + V₂O₅ + WO₃ is from 18.9 to 48.6 wt.%, and optionally with the other oxides within the ranges as in Table 2:

| Table 2 | Adherence | | Adherence | Opacity |
|---|---|---|---|---|
| | 2 | | 2 | 2 |
| WEIGHT % | | | | |
| Oxide | From | to | From | to |
| CeO₂ + CuO + Fe₂O₃ + MoO₃ + SnO₂ + WO₃ | 0.1 | 48.6 | 0.1 | 48.6 |
| CeO₂ + Cr₂O₃ + CuO + Fe₂O₃ + MnO₂ + MoO₃ + Sb₂O₃ + SnO₂ + V₂O₅ + WO₃ | 0.1 | 48.6 | 16.7 | 48.6 |
| Al₂O₃ | 0.0 | 26.7 | 0.0 | 18.5 |
| B₂O₃ | 5.0 | 26.2 | 5.0 | 26.2 |
| CeO₂ | 0.0 | 28.6 | 0.0 | 28.6 |
| Cr₂O₃ | 0.0 | 19.4 | 0.0 | 14.4 |
| CuO | 0.0 | 22.7 | 0.0 | 22.7 |
| Fe₂O₃ | 0.0 | 33.3 | 0.0 | 27.9 |
| K₂O | 1.9 | 11.7 | 1.9 | 9.7 |
| Li₂O | 0.0 | 5.6 | 0.0 | 3.0 |
| MnO₂ | 0.0 | 2.0 | 0.0 | 0.0 |
| MoO₃ | 0.0 | 1.2 | 0.1 | 1.2 |
| Na₂O | 8.1 | 27.4 | 8.6 | 22.2 |
| P₂O₅ | 1.6 | 37.6 | 1.6 | 31.3 |
| Sb₂O₃ | 0.0 | 33.4 | 0.0 | 33.4 |
| SiO₂ | 1.9 | 44.6 | 2.0 | 30.3 |
| SnO₂ | 0.0 | 28.6 | 0.0 | 28.6 |
| TiO₂ | 0.3 | 28.4 | 0.3 | 8.8 |
| V₂O₅ | 0.0 | 19.4 | 0.0 | 19.5 |
| WO₃ | 0.0 | 9.1 | 0.0 | 9.1 |
| ZnO | 0.0 | 6.3 | 0.0 | 5.0 |
| ZrO₂ | 0.0 | 0.8 | 0.0 | 0.6 |

In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

As specified in the table 2, the primer composition expresses a very good adherence (2) within certain ranges of oxides and a very good adherence (2) combined with a very good opacity (3) within certain preferred ranges.

Particularly preferred embodiments are those methods in which a primer composition is used as specified in Table 3 wherein the amount of CeO₂ + CuO + Fe₂O₃ + MoO₃ + SnO₂ + WO₃ is from 18.9 to 48.6 wt.%, and the amount of CeO₂ + Cr₂O₃ + CuO + Fe₂O₃ + MnO₂ + MoO₃ + Sb₂O₃ + SnO₂ + V₂O₅ + WO₃ is from 18.9 to 48.6 wt.%, and optionally with the other oxides within the ranges as in Table 3:

| Table 3 | Adherence | | Adherence | Opacity |
|---|---|---|---|---|
| | 1 | | 1 | 1 |
| WEIGHT % | | | | |
| Oxide | From | to | From | to |
| CeO₂ + CuO + Fe₂O₃ + MoO₃ + SnO₂ + WO₃ | 0.2 | 48.6 | 18.9 | 48.6 |
| CeO₂ + Cr₂O₃ + CuO + Fe₂O₃ + MnO₂ + MoO₃ + Sb₂O₃ + SnO₂ + V₂O₅ + WO₃ | 0.2 | 48.6 | 18.9 | 48.6 |
| Al₂O₃ | 0.0 | 22.2 | 0.0 | 0.3 |
| B₂O₃ | 5.1 | 26.2 | 9.8 | 26.2 |
| CeO₂ | 0.0 | 28.6 | 0.0 | 28.6 |
| Cr₂O₃ | 0.0 | 0.0 | 0.0 | 0.0 |
| CuO | 0.0 | 22.7 | 1.9 | 22.7 |
| Fe₂O₃ | 0.0 | 33.3 | 11.1 | 25.8 |
| K₂O | 1.9 | 11.7 | 2.3 | 9.0 |
| Li₂O | 0.0 | 4.7 | 0.0 | 3.0 |
| MnO₂ | 0.0 | 0.0 | 0.0 | 0.0 |
| MoO₃ | 0.1 | 1.2 | 0.2 | 1.2 |
| Na₂O | 8.6 | 25.2 | 9.8 | 22.2 |
| P₂O₅ | 1.6 | 37.6 | 1.6 | 2.2 |
| Sb₂O₃ | 0.0 | 0.0 | 0.0 | 0.0 |
| SiO₂ | 3.0 | 44.6 | 13.6 | 27.0 |
| SnO₂ | 0.0 | 28.6 | 0.0 | 28.6 |
| TiO₂ | 0.5 | 14.2 | 6.1 | 8.8 |
| V₂O₅ | 0.0 | 0.0 | 0.0 | 0.0 |
| WO₃ | 0.0 | 9.1 | 0.0 | 0.0 |
| ZnO | 0.0 | 6.3 | 0.0 | 0.0 |
| ZrO₂ | 0.0 | 0.8 | 0.0 | 0.0 |

In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

As specified in the table 3, the primer composition expresses a perfect adherence (1) within certain ranges of oxides and a perfect adherence (1) combined with a perfect opacity (1) within certain preferred ranges.

Particularly preferred embodiments of this disclosure are those methods in which a primer composition is used as specified in Table 4 wherein the amount of CeO₂ + CuO + Fe₂O₃ + MoO3 + SnO₂ + WO3 is from 18.9 to 48.6 wt.%, and the amount of CeO₂ + Cr₂O₃ + CuO + Fe₂O₃ + MnO₂ + MoO3 + Sb₂O₃ + SnO₂ + V₂O₅ + WO3 is from 18.9 to 48.6 wt.%, and optionally with the other oxides within the ranges as in Table 4:

| Table 4 | Adherence | | Adherence | Opacity |
|---|---|---|---|---|
| | 3 | | 3 | 1 |
| WEIGHT % | | | | |
| Oxide | From | to | From | to |
| CeO₂ + CuO + Fe₂O₃ + MoO₃ + SnO₂ + WO₃ | 0.1 | 48.6 | 15.1 | 48.6 |
| CeO₂ + Cr₂O₃ + CuO + Fe₂O₃ + MnO₂ + MoO₃ + Sb₂O₃ + SnO₂ + V₂O₅ + WO₃ | 0.1 | 48.6 | 17.1 | 48.6 |
| Al₂O₃ | 0.0 | 26.7 | 0.0 | 7.0 |
| B₂O₃ | 1.6 | 26.2 | 8.3 | 26.2 |
| CeO₂ | 0.0 | 28.6 | 0.0 | 28.6 |
| Cr₂O₃ | 0.0 | 19.4 | 0.0 | 0.0 |
| CuO | 0.0 | 22.7 | 0.0 | 22.7 |
| Fe₂O₃ | 0.0 | 33.3 | 11.1 | 27.9 |
| K₂O | 1.9 | 11.7 | 2.1 | 9.7 |
| Li₂O | 0.0 | 5.9 | 0.0 | 3.0 |
| MnO₂ | 0.0 | 28.6 | 0.0 | 1.4 |
| MoO₃ | 0.0 | 1.2 | 0.2 | 1.2 |
| Na₂O | 8.1 | 28.3 | 8.5 | 22.2 |
| P₂O₅ | 1.6 | 37.6 | 1.6 | 11.0 |
| Sb₂O₃ | 0.0 | 33.4 | 0.0 | 0.2 |
| SiO₂ | 1.9 | 44.6 | 13.6 | 30.3 |
| SnO₂ | 0.0 | 28.6 | 0.0 | 28.6 |
| TiO₂ | 0.3 | 28.4 | 1.0 | 8.8 |
| V₂O₅ | 0.0 | 19.5 | 0.0 | 19.5 |
| WO₃ | 0.0 | 9.1 | 0.0 | 0.0 |
| ZnO | 0.0 | 25.2 | 0.0 | 1.9 |
| ZrO₂ | 0.0 | 8.4 | 0.0 | 0.6 |

In a preferred embodiment the primer composition does not contain Sb₂O₃, or not more than 10 wt.%, preferably not more than 5 wt.%, more preferably not more than 1 wt.%, even more preferably not more than 0.5 wt.%.

As specified in the table 4, the primer composition expresses an average adherence (3) within certain ranges of oxides and an average adherence (3) combined with a perfect opacity (1) within certain preferred ranges.

Particularly preferred embodiments of this disclosure are those methods in which a primer composition is used as specified in Table 5 wherein the amount of CeO₂ + CuO + Fe₂O₃ + MoO₃ + SnO₂ + WO₃ is from 18.9 to 48.6 wt.%, and the amount of CeO₂ + Cr₂O₃ + CuO + Fe₂O₃ + MnO₂ + MoO₃ + Sb₂O₃ + SnO₂ + V₂O₅ + WO₃ is from 18.9 to 48.6 wt.%, and optionally with the other oxides within the ranges as in Table 5:

| Table 5 | Adherence | | Adherence | Opacity |
|---|---|---|---|---|
| | 1 | | 1 | 3 |
| WEIGHT % | | | | |
| Oxide | From | to | From | to |
| CeO₂ + CuO + Fe₂O₃ + MoO₃ + SnO₂ + WO₃ | 0.2 | 48.6 | 16.6 | 48.6 |
| CeO₂ + Cr₂O₃ + CuO + Fe₂O₃ + MnO₂ + MoO₃ + Sb₂O₃ + SnO₂ + V₂O₅ + WO₃ | 0.2 | 48.6 | 16.6 | 48.6 |
| Al₂O₃ | 0.0 | 22.2 | 0.0 | 5.6 |
| B₂O₃ | 5.1 | 26.2 | 8.4 | 26.2 |
| CeO₂ | 0.0 | 28.6 | 0.0 | 28.6 |
| Cr₂O₃ | 0.0 | 0.0 | 0.0 | 0.0 |
| CuO | 0.0 | 22.7 | 1.9 | 22.7 |
| Fe₂O₃ | 0.0 | 33.3 | 0.0 | 30.4 |
| K₂O | 1.9 | 11.7 | 1.9 | 10.6 |
| Li₂O | 0.0 | 4.7 | 0.0 | 3.0 |
| MnO₂ | 0.0 | 0.0 | 0.0 | 0.0 |
| MoO₃ | 0.1 | 1.2 | 0.1 | 1.2 |
| Na₂O | 8.6 | 25.2 | 8.6 | 22.2 |
| P₂O₅ | 1.6 | 37.6 | 1.6 | 9.5 |
| Sb₂O₃ | 0.0 | 0.0 | 0.0 | 0.0 |
| SiO₂ | 3.0 | 44.6 | 13.6 | 31.0 |
| SnO₂ | 0.0 | 28.6 | 0.0 | 28.6 |
| TiO₂ | 0.5 | 14.2 | 4.1 | 8.8 |
| V₂O₅ | 0.0 | 0.0 | 0.0 | 0.0 |
| WO₃ | 0.0 | 9.1 | 0.0 | 9.1 |
| ZnO | 0.0 | 6.3 | 0.0 | 2.2 |
| ZrO₂ | 0.0 | 0.8 | 0.0 | 0.6 |

In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

As specified in the table 5, the primer composition expresses a perfect adherence (1) within certain ranges of oxides and a perfect adherence (1) combined with an average opacity (3) within certain preferred ranges.

Embodiments of the invention are those methods in which a primer composition is used as specified in Table 6 wherein the amount of CeO₂ + CuO + Fe₂O₃ + MoO₃ + SnO₂ + WO₃ is from 18.9 to 48.6 wt.%, and the amount of CeO₂ + Cr₂O₃ + CuO + Fe₂O₃ + MnO₂ + MoO₃ + Sb₂O₃ + SnO₂ + V₂O₅ + WO₃ is from from 18.9 to 48.6 wt.%, and optionally with the other oxides within the ranges as in Table 6:

| Table 6 | Adherence | | Adherence | Opacity |
|---|---|---|---|---|
| | 1 | | 1 | 2 |
| WEIGHT % | | | | |
| Oxide | From | to | From | to |
| CeO₂ + CuO + Fe₂O₃ + MoO₃ + SnO₂ + WO₃ | 0.2 | 48.6 | 18.9 | 48.6 |
| CeO₂ + Cr₂O₃ + CuO + Fe₂O₃ + MnO₂ + MoO₃ + Sb₂O₃ + SnO₂ + V₂O₅ + WO₃ | 0.2 | 48.6 | 18.9 | 48.6 |
| Al₂O₃ | 0.0 | 22.2 | 0.0 | 5.3 |
| B₂O₃ | 5.1 | 26.2 | 8.4 | 26.2 |
| CeO₂ | 0.0 | 28.6 | 0.0 | 28.6 |
| Cr₂O₃ | 0.0 | 0.0 | 0.0 | 0.0 |
| CuO | 0.0 | 22.7 | 1.9 | 22.7 |
| Fe₂O₃ | 0.0 | 33.3 | 7.4 | 25.8 |
| K₂O | 1.9 | 11.7 | 1.9 | 9.0 |
| Li₂O | 0.0 | 4.7 | 0.0 | 3.0 |
| MnO₂ | 0.0 | 0.0 | 0.0 | 0.0 |
| MoO₃ | 0.1 | 1.2 | 0.1 | 1.2 |
| Na₂O | 8.6 | 25.2 | 8.6 | 22.2 |
| P₂O₅ | 1.6 | 37.6 | 1.6 | 8.8 |
| Sb₂O₃ | 0.0 | 0.0 | 0.0 | 0.0 |
| SiO₂ | 3.0 | 44.6 | 13.6 | 28.7 |
| SnO₂ | 0.0 | 28.6 | 0.0 | 28.6 |
| TiO₂ | 0.5 | 14.2 | 4.1 | 8.8 |
| V₂O₅ | 0.0 | 0.0 | 0.0 | 0.0 |
| WO₃ | 0.0 | 9.1 | 0.0 | 9.1 |
| ZnO | 0.0 | 6.3 | 0.0 | 2.1 |
| ZrO₂ | 0.0 | 0.8 | 0.0 | 0.6 |

In a preferred embodiment of the invention, the primer composition does not contain Sb₂O₃, or not more than 10 wt.%, preferably not more than 5 wt.%, more preferably not more than 1 wt.%, even more preferably not more than 0.5 wt.%.

As specified in the table 6, the primer composition expresses a perfect adherence (1) within certain ranges of oxides and a perfect adherence (1) combined with an average opacity (3) within certain preferred ranges.

Particularly preferred embodiments of this disclosure are those methods in which a primer composition is used as specified in Table 7 wherein the amount of CeO₂ + CuO + Fe₂O₃ + MoO₃ + SnO₂ + WO₃ is from 18.9 to 48.6 wt.%, and the amount of CeO₂ + Cr₂O₃ + CuO + Fe₂O₃ + MnO₂ + MoO₃ + Sb₂O₃ + SnO₂ + V₂O₅ + WO₃ is from 18.9 to 48.6 wt.%, and optionally with the other oxides within the ranges as in Table 7:

| Table 7 | Adherence | | Adherence | Opacity |
|---|---|---|---|---|
| | 2 | | 2 | 1 |
| WEIGHT % | | | | |
| Oxide | From | to | From | to |
| CeO₂ + CuO + Fe₂O₃ + MoO₃ + SnO₂ + WO₃ | 0.1 | 48.6 | 15.1 | 48.6 |
| CeO₂ + Cr₂O₃ + CuO + Fe₂O₃ + MnO₂ + MoO₃ + Sb₂O₃ + SnO₂ + V₂O₅ + WO₃ | 0.1 | 48.6 | 17.1 | 48.6 |
| Al₂O₃ | 0.0 | 26.7 | 0.0 | 5.1 |
| B₂O₃ | 5.0 | 26.2 | 9.2 | 26.2 |
| CeO₂ | 0.0 | 28.6 | 0.0 | 28.6 |
| Cr₂O₃ | 0.0 | 19.4 | 0.0 | 0.0 |
| CuO | 0.0 | 22.7 | 0.0 | 22.7 |
| Fe₂O₃ | 0.0 | 33.3 | 11.1 | 27.9 |
| K₂O | 1.9 | 11.7 | 2.1 | 9.7 |
| Li₂O | 0.0 | 5.6 | 0.0 | 3.0 |
| MnO₂ | 0.0 | 2.0 | 0.0 | 0.0 |
| MoO₃ | 0.0 | 1.2 | 0.2 | 1.2 |
| Na₂O | 8.1 | 27.4 | 9.5 | 22.2 |
| P₂O₅ | 1.6 | 37.6 | 1.6 | 8.1 |
| Sb₂O₃ | 0.0 | 33.4 | 0.0 | 0.0 |
| SiO₂ | 1.9 | 44.6 | 13.6 | 30.3 |
| SnO₂ | 0.0 | 28.6 | 0.0 | 28.6 |
| TiO₂ | 0.3 | 28.4 | 4.5 | 8.8 |
| V₂O₅ | 0.0 | 19.4 | 0.0 | 19.5 |
| WO₃ | 0.0 | 9.1 | 0.0 | 0.0 |
| ZnO | 0.0 | 6.3 | 0.0 | 1.9 |
| ZrO₂ | 0.0 | 0.8 | 0.0 | 0.6 |

In a preferred embodiment of the invention, the primer composition does not contain Sb₂O3, or not more than 10 wt.%, preferably not more than 5 wt.%, more preferably not more than 1 wt.%, even more preferably not more than 0.5 wt.%.

As specified in the table 7, the primer composition expresses a very good adherence (2) within certain ranges of oxides and a very good adherence (2) combined with a perfect opacity (1) within certain preferred ranges.

The methods using the primer compositions above result in enamel layers that pair a average to perfect adherence with an average to perfect compatibility.

### The substrate

The substrate used in the present invention is a steel substrate.

A steel substrate is, in terms of the present invention, a substrate of a metal alloy that contains at least iron and carbon, wherein the carbon content is in the range of 0.001 to 2.5 % by weight. Other chemical elements such as Mn, Si, Al, P, C, S, O, N, Cr, Cu, Ni, Mo, Ti, Nb, V, W, Co, Zr, B, Ca, Sn, Pb, Sb, Y, Ta, and Hf can also be found in many steel grades. The concentrations in these elements greatly vary in function of the steel grades and range between 0.0001 % by weight and 30% by weight.

Steel can be selected from carbon steel or alloyed steel. Carbon steels and alloyed steels are in themselves well known in the art. Carbon steels include low carbon steel, extra low carbon steel, ultra-low low carbon steel, micro alloyed steel and dual phase steel, high strength steel and high strength low allow steel, as well as bake hardenable (BH) steel and hot forming (HF) steel. Alloyed steels include stainless steels and chromium and molybdenum steels.

The steel substrate on which the metal coating is applied can be a so-called flat product such as a coil, sheet or a plate. It can also be a so-called long product such as a beam, a pile, a wire, a section. Moreover, the surface does not need to be flat. For instance, it may be a formed sheet. The steel substrate may also be a formed product.

The present invention does not impose any requirement for the composition of the steel substrate to be enamelled, as long as it can be provided with a metal coating prior to enamelling. Thus, one of the advantages of the present invention is, that by using a steel that is provided with a metal coat prior to the enamelling process with a primer composition and, optionally a top coat, a wider range of steels is now available for being provided with an enamel coating that what was known in the prior art and at a lower temperature range being in the area of 650-750°C. The steels suitable for use in the present invention are defined in EN10346, and described in ArcelorMittal's brochure " metallic coated steel products"

### Metal coated steel

The metal coating used in the present invention can be commercially available. Metal coated steel is used to protect, shelter, package and transport and at the same time meets the demand for a solid, durable and aesthetically pleasing material. Metal coated sheet can be used in the form of profiled parts for roofing, cladding and as cold formed sections but also for applications such as doors, stairs, ceilings etc. These products have a very wide range of applications in general industry, e.g. furniture, air conditioning, tanks, thermal shields etc. Steel substrates may have different metal coating compositions. The coating may be based on zinc, a zinc/aluminium alloy, a zinc/silicon alloy, an aluminium/silicon alloy or pure aluminium, alloys furthers containing magnesium, and many others. In the method of the present invention preferably the steel substrate is coated with an aluminium and/or zinc-containing surface prior to being coated with the primer composition according to the present invention. Suitable coatings for example include zinc-coatings (e.g. of the type that is generally indicated in the art, for example in the draft European standard dEN 10346:2013, by "Z"), zinc-iron alloy coatings (e.g. of the type that is generally indicated in the art, for example in the draft European standard dEN 10346:2013, by "ZF"), zinc-aluminium alloy coatings (e.g. of the type that is generally indicated in the art, for example in the draft European standard dEN10346:2013, by "ZA"), zinc-magnesium alloy coatings (e.g. of the type that is generally indicated in the art, for example in the draft European standard dEN10346:2013, by "ZM") and aluminium-zinc alloy coatings (e.g. of the type that is generally indicated in the art, for example in the draft European standard dEN 10346:2013, by "AZ"). A supplementary advantage of the present invention resides in the fact that the firing temperature is sufficiently low below AC3 in order to minimise the impact of the firing on the mechanical properties of the steel substrate, whereas the temperature is sufficiently high to ensure a good adherence and good finishing of the vitreous enamel coating. The metal coating is selected from the group consisting of aluminium, zinc, an aluminium-containing alloy, a zinc-containing alloy or combinations thereof. It is preferred to use an aluminium containing alloy.

When aluminium is contained in the metal coating, the aluminium content in the coating may vary. Preferably aluminium is the major component in the alloy, i.e. is present in an amount of more than 50 % by weight of the coating. The amount of aluminium may range up to 100 % by weight, and most preferably is in the range of 50 to 95 % by weight of the coating. Elements that may be included in an aluminium alloy include silicon, iron, magnesium, manganese, copper, zinc, tin and combinations thereof. Suitable aluminium containing commercial coated steel products are aluminised steel Type 1 (aluminium-silicon alloy), aluminised steel Type 2 (pure aluminium). The present inventor has also found that when a metal coat is based on aluminium, a lower temperature (650-750) can be used for firing the primer compositions to obtain a good adherence.

When the metal coating comprises zinc, the zinc content may also range from 50% by weight of the coating to pure 100% zinc. When a zinc alloy is used, it may comprise iron, magnesium, silicon and/or aluminium. Advantageously, the amount of zinc in a zinc-containing coating is in the range of 90 to 100 % by weight. Suitable zinc containing commercial coated steel products are electro galvanised steel, hot dip galvanised steel, galvannealed steel, zinc-aluminium coated steel, and zinc-aluminium-magnesium coated steel (ZM). Typically the amount of zinc in such coatings is in the range of 90 to 97%wt, based on the coating.

A suitable metal coating that contains mainly aluminium may also comprise zinc. In such an embodiment the amount of aluminium is preferably in the range of 40 to 80 % by weight and the amount of zinc in the range of 30 to 50 % by weight. A preferred coated steel is commercially known as Galvalume ® and contains a 55 % by weight Al, 43.4 % by weight Zn and 1.6 % by weight of Si. Suitable metal coatings may also contain magnesium (certain types of Galvalume might contain magnesium).

Another preferred embodiment includes a metal coating that contains aluminium and silicon. Since aluminized steel can be excellently coated in accordance with the method of the present invention, the aluminium alloy used for the metal coating is suitably an aluminium-silicon alloy. The silicon content in such alloys may be from 4 to 15% by weight, based on the alloy. Preferably the silicon content varies from 5 to 11 % by weight, such as 10% by weight. Such aluminium-silicon alloys may comprise other elements, too. Suitable additional elements include zinc, manganese, magnesium, iron, vanadium, strontium, calcium, titanium and combinations thereof. In such alloys, the amount of the additional elements may vary, whilst it is preferred to maintain aluminium as the main component, i.e. as the element of more than 50 % by weight, based on the alloy.

The metal coating may be applied on steel by any method. Such methods include cladding, plasma and thermal flame spraying, hot dipping, water-based electrodeposition, ionic liquid-based electrodeposition, electroless deposition, physical vapour deposition and chemical vapour deposition, wherein hot-dipping methods are preferred. Although it is known that metal coatings may be applied by ionic liquid-based electrodeposition, physical vapour deposition and chemical vapour deposition, the use of thus coated steel articles in the preparation of enamelled steel is novel. The skilled person will know the various methods, and realise that hot dipping, which includes cleaning the steel, placing it in an aluminium and/or zinc-containing bath at a temperature slightly above the melting point of the metal coating composition, then pulling it out and cooling it in air or nitrogen, is a preferred method. The metal coating may have varying thicknesses, depending on the use of the coated object. Suitable thicknesses may be as thin as 0.1 µm, e.g. when applied via electrodeposition or chemical or physical vapour deposition. Typical thicknesses range from 1 to 100 µm, preferably from 2 to 50 µm.

### Additional components

In the field of enamelling, it is common to add pigments for colouring purposes to coating compositions. These pigments are typically referred to as mineral pigments and typically are metal oxides that do not dissolve but remain dispersed within the coating. Known colour-providing enamel components include iron oxide, praseodymium oxide, neodymium oxide, as well as chromium oxide, copper oxide, manganese oxide. Also mineral fillers may be added. An example of a mineral filler would be aluminium oxide, in crystallized form. Mica particles are another example, added to provide a metallized look. These pigments and mineral fillers do not dissolve. They may be present in large amounts. For instance, they may be added up to 20% by weight.

Pigments, fillers and other additional components may be added to the compositions of the invention. They can be distinguished, both qualitatively and quantitatively from the components that make up the compositions of the invention by conventional solid characterization techniques such as Raman spectroscopy, Xray analysis etc.. By combining techniques such as elemental analysis using ICP-AAS (that determines the whole elemental composition) with these techniques that focus on dispersed and crystalline material a distinction can be made between the dissolved components of the coating and these additional components.

### Preparation of the primer composition:

The primer composition according to the invention may be prepared using known enamelling or glass melting techniques. For glass melting techniques conventional refractory crucible may be employed to prepare so-called glass frit. Commonly, selected metal oxides are melted in a smelter at temperatures in the range of 1000 to 1400°C for a period of time that may extend from about 15 minutes to about 2 hours. The molten composition is subsequently cooled and ground to yield the enamel composition according to the invention. Also related metal salts may be used, that form the respective oxide at the elevated temperatures. For enamelling technique, the same final oxide composition might be obtained by the skilled person by choosing adequate glass compositions, adjusting their respective proportions in order to obtain after weighing and milling the desired composition after the vitrification step.

When the primer coating layer has been fired an adhering primer coating is obtained onto which a topcoat may be applied without losing surface aspect or adhesion.

### Process of the invention:

### Pre-treatment

Before the vitreous enamel composition of the present invention is applied onto metal coated steel, the surface thereof can suitably be subjected to a pre-treatment before the vitreous enamel composition is applied onto the surface.

The pre-treatment may comprise any conventional pre-treatment of surfaces to be coated by an enamel composition. Such pre-treatments include acid treatment, alkali treatment, annealing, passivation and conversion, and combinations thereof. The acid and alkali treatments typically are used to clean the surface. In an annealing treatment the substrate with metal coating is maintained at elevated temperature and subsequently cooled to modify the surface condition of the metal coated substrate before enamelling. In passivation the corrosion resistance is improved. The goal of the pre-treatment is to obtain a surface on which the vitrified primer coating adheres well.

### Application of the primer composition:

The primer composition used in the method of the present invention is applied (single or multiple layers) to provide a primer coating with a thickness in the range of 3 to 120 µm preferably 4 to 100 µm. Enamel coatings with these thicknesses provide adequate adhesion and at the same time show an excellent resistance to heat and corrosive chemicals. More preferably, the primer coating is provided with a thickness in the range from 5 to 40 µm. The relatively small thickness allows an efficient firing and avoids any deformation of the steel substrate.

The vitrified primer composition of the present invention, even if applied on both opposite sides of a metal substrate and fired, provides an excellent adherence to the metal coated steel without fish scale deficiencies. The obtained enamel coating may for some applications be considered sufficient. However, the current invention is of particular interest if a topcoat is applied. A topcoat (single or multiple layers) may be desirable for applying different vitreous compositions, e.g. in view of desired colour, or any other property, or if a thicker enamel coating is desired. According to the present invention, and in particular if the primer coating has a thickness in the range from 5 to 40 µm, preferably a topcoat is applied onto the primer coating on the surface of the metal coated steel substrate. The topcoat may be applied onto the enamel composition according to the invention before or after the latter is being fired. In the latter case, the substrate needs to be vitrified a second time. The composition of the topcoat may be the same or different, provided that it is suitable for vitrification at a relatively low temperature, preferably the temperature range of the first vitrification step.

The topcoat layer may have a thickness in the same range as the primer layer, i.e. from 3 to 300 µm. The obtained multilayer enamel system has preferably a total thickness ranging between 20 and 350 µm and most preferably between 25 to 100 µm.

The primer composition can be applied to the metal coated steel in the method of the invention in any conventional way. Such application manner includes wet application methods, including cladding, dipping, flow-coating, roll-coating, brushing, screen printing and spraying. The primer composition according to the invention may therefore be included in a carrier. Such a carrier is suitably water, which enables the composition to be sprayed or to be used for dipping. Alternatively, the composition may be included in a polymer resin for purposes that will be explained hereinafter. The carrier is thus dependent on the technique with which the primer composition is applied onto the metal coated steel substrate. The carrier comprises typically water and/or organic compounds, such as emulsifiers, suspension agents and polymer resins. It is understood that these organic compounds are not to be considered part of the primer composition, since they generally disintegrate (i.e., oxidize and form gases during firing). Application methods therefore may involve the use of slips, i.e. a slurry that has been obtained by mixing glass frit, additives and water. Additives may comprise viscosity-controlling compounds such as electrolytes and polymers such as cellulose-type polymers. After application of the slip, the layer of primer composition is allowed to dry before it is fired. Drying can be done in any known manner, such as heating the primer coating layer by means of hot air, e.g. at a temperature in the range of 30 to 90°C. Other methods are also possible, such as infra-red-drying and microwave drying.

The primer composition may also be applied via dry application methods. A very convenient method is dry electrostatic application, i.e. the deposition of electrostatically charged dry primer composition powder.

A suitable manner to provide the primer composition according to method of the invention resides in the preparation of a liquid composition that comprises a polymer resin and the primer composition. The liquid composition is subsequently applied to the surface of the metal coated steel substrate to form a layer of resin and primer composition. This layer is then dried or cured to obtain a layer comprising the polymer and the primer composition. Examples of such layers are described in US6455625 and US 5325580. The polymer may be acrylate based materials or epoxy resins or polyesters. Suitably the resin comprises a thermosetting resin or a mixture of a thermosetting and thermoplastic resin, and this thermosetting resin or mixture is cured after the layer comprising the polymer and the primer composition has been applied to the surface of the metal coated steel substrate. Accordingly, the present invention also provides a pre-enamelled steel article comprising a metal coated steel substrate whereon a coating comprising a polymer resin and the primer composition according to the present invention has been applied. When the pre-enamelled steel article is being fired, the polymer resin will suitably burn completely at the firing temperature.

### Vitrification:

Enamel coatings are obtained once the primer composition has been applied. The vitrification step may be carried out in a common furnace. The vitrification step is preferably carried out at a temperature from about 650 to about 750°C. For instance, the article may be fired for 4 to 6 minutes at 675°C, for 3 to 5 minutes at 710°C, or for 3 to 3.5 minutes at 740°C. A preferred temperature range for firing lies in the are between 670-740°C to create optimum adherence and compatibility.

### Application of the topcoat composition:

Application of the topcoat composition may be done by the same methods used for the application of the primer composition. The topcoat composition may be applied after the primer composition has been vitrified. The primer coated metal coated steel substrate is then again fired to vitrify the topcoat composition. This is usually done at the same temperature range mentioned herein before. It is also possible to apply the topcoat composition onto the primer composition and before the vitrification step of the latter. This has the advantage that a relatively flexible steel substrate is obtained, that can still be formed but that is already pre-enamelled and only requires a final vitrification step.

### Enamelled article:

The article can suitably be selected from the groups consisting of: white goods, brown goods, architectural structures and household appliances. Examples include, video and computer equipment, doors and doorframes, cooking hobs, hob tops, front panels and doors of free standing cookers, microwaves and oven cavities, tumble driers, washing machine drum, cladding panels of free standing heating devices, barbecues, heat reflectors, whiteboards, roof tiles, pots and pans, corrugated panels for heat exchangers, panels for cladding, roofing, advertising, boilers and electric water heaters, washing basin, bath tub, shower tray and many others, such as in the field of structural applications include pipes, sheet piles, workforms and plates..

The invention shall be further illustrated by means of the following examples.

### EXAMPLES

Enamel compositions were prepared by wet milling soft enamel frits normally dedicated to enamelling of aluminium at low temperature, such as 5068, 5549, GL4317 obtainable from Ferro Enamels Division to which the inventors added other mineral compounds in order to modify the composition. Silica, titania, alumina, boric acid, and borax, iron oxide, chromium oxide, manganese dioxide, vanadium oxide, copper oxide but also phosphates, or hydroxides of corresponding metals, were used. The final oxide composition was analysed by Inductive Coupled Plasma after dissolving the powder or by SEM-EDX directly on the coatings after being vitrified .

The pH of enamel slip was adjusted to a pH between 8 and 12, by adding for instance either boric acid, molybdic acid or sodium or potassium hydroxide, when necessary. Stable suspensions were obtained by using bentone EW, bentonite, fume silica, CMC type KG 25 or KG 1000 from Zschimmer &Schwarz, to get a dry content varying between 30 and 70%.

In order to get a formable coating, a polymer was added to the suspension, which allows getting a deformable (hybrid) coating after curing. Many types of polymers can be used, such as polyurethanes, polyesters, acrylics. The proportion of polymer, relative to the glass powder, was varied from 10 to 50 for 100 parts by weight. Suspensions were applied using bare coaters, in order to get a wet film of about 10 to 50 micrometres but can be applied by dipping, spraying, screen printing or roll coating technology.

Curing was carried out between 60 to 230°C, depending on the polymer used. The substrates were either aluminised steel Type 1, aluminised steel Type 2, Galvalume® sheets, cut in small sheets of about 100^{∗}300mm, deburred, previously degreased by commercial alkaline cleaners such as ridoline® C72 from Henkel or Galvaclean® S 5086 from Chemetall. After application, samples were first cured in a forced air convection oven settled at 160°C, during 10 to 30 seconds (depending on wet film thickness). The steel of the metal coated steel is carbon steel or alloyed steel. All examples were tested onto DX51D +AS EN10346, DX54D +AS EN10346, DX55D+AS EN 10346, DX56D+AS EN10346 All the examples were produced with steels normally out of the scope of EN10209. We used metallic coated steels as defined in EN10346, HX260LAD+AS EN10346
After curing, it was verified that the organic coating was adhering to the substrate and was also bendable, using a conical mandrel which minimum bending diameter is 4 mm. After curing the sample, vitrification step was carried out according to the following scheme:
- 675°C , 4 to 6 minutes
- 710°C, 3 to 5 minutes
- 740°C, 3 and 3.5 minutes
Samples showing good adherence were coated with white enamel NPD787/6 from Ferro enamels division, in order to get a layer of about 50 micrometres once vitrified. The frit was milled with the same additives as previously described, applied using a bar coater 90, dried, and fired. Coupons were fired at 710 and 740°C during 4 minutes. Only primer compositions according to the present invention achieved to obtain an opacified and white layer, keeping a good adherence to the substrate for the bilayer system.

The opacification was quantified by measuring the colour of the samples, using a colorimeter type Hunterlab Miniscan XE Plus (type 4500L). For opacified layers, the L value is >85, for non opacified layers <50

The adherence of enamels is evaluated by impact test, according to EN10209. The adherence is quoted from 1 excellent to 5 = null. For low indexes, an intimate glass-metal contact can be observed after breaking the upper part of the coating. The higher the index, the less "interlock" is found. For index 5, we obtain full chipping off of the glass layer.

| Evaluation scale | | | |
|---|---|---|---|
| Adherence | | Aspect | |
| 1 | Perfect (excellent) | 1 | White/smooth/glossy |
| 2 | Very good | 2 | Opacified/Not smooth/not glossy |
| 3 | Average | 3 | Mostly white |
| 4 | Bad | 4 | Some white spots |
| 5 | Very bad (null, full chipping) | 5 | No white |

Primer compositions that provide good adherence even when a topcoat is applied after vitrification were found. Table 9 contains some comparative examples CE1-CE4. The oxide composition of the formulations that give good adherence in combination with good compatibility are also presented in Table 9. The sums of the acid, basic and intermediate components are provided, respectively as well as the combined amounts of CeO₂ + Cr₂O₃+ CuO + Fe₂O₃+ MnO₂+ MoO₃+ SnO₂ + V₂O₅ + WO₃ and he combined amounts of CeO₂ + CuO + Fe₂O₃+ MoO₃+ SnO₂ + WO₃, wherein examples B35, B36, C+V, C14, C15 and 18-FE-8 are not according to the present invention.

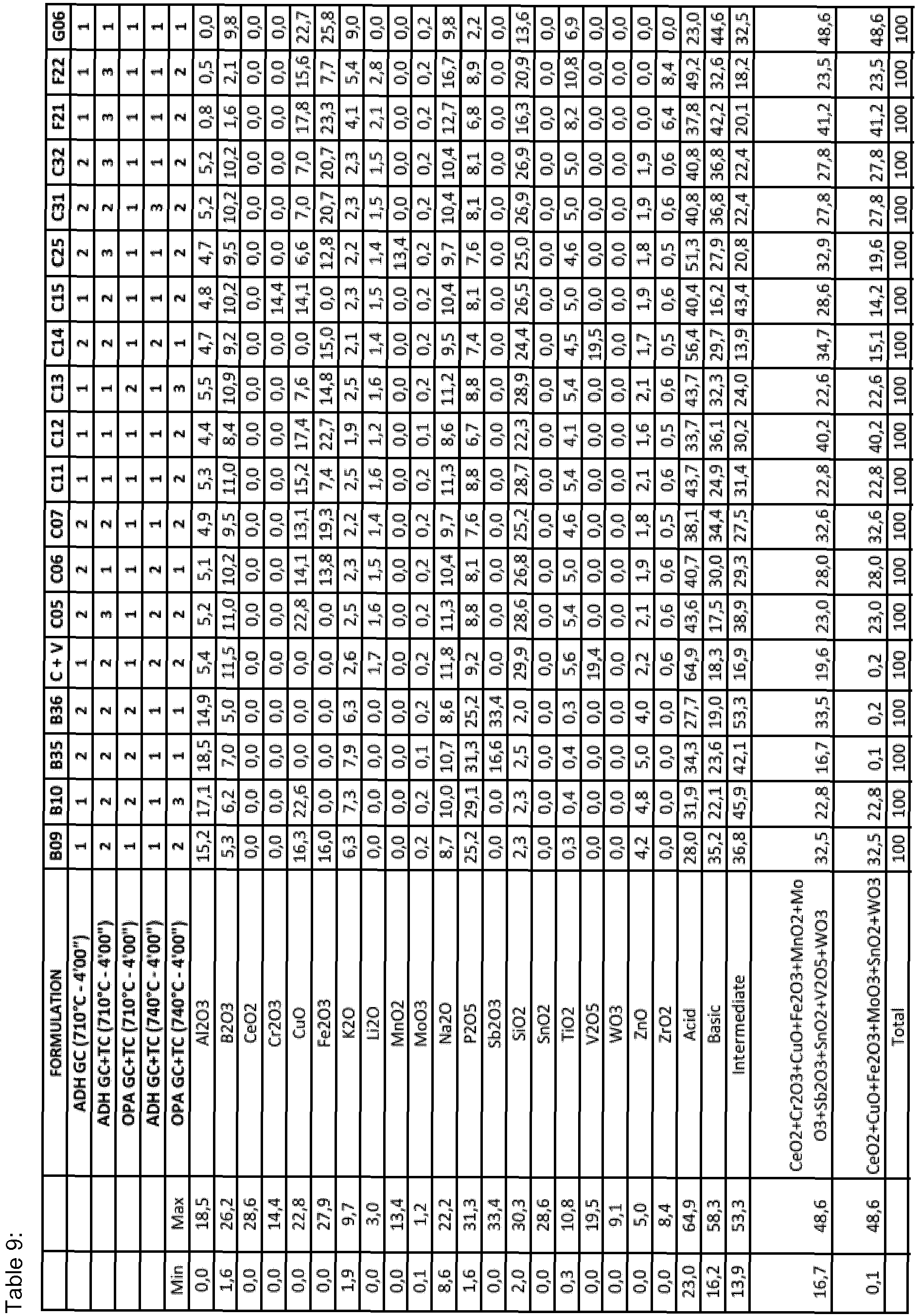

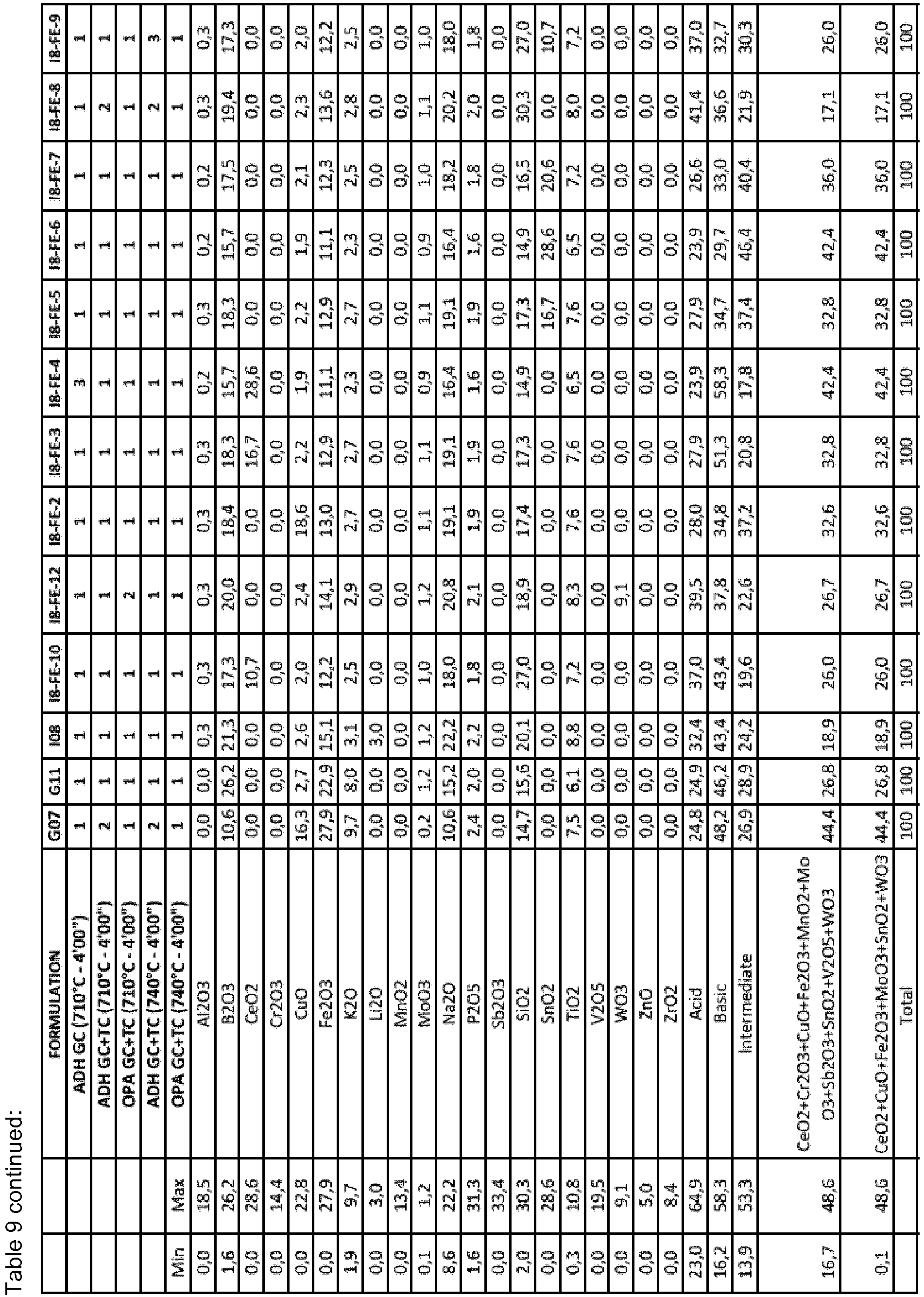

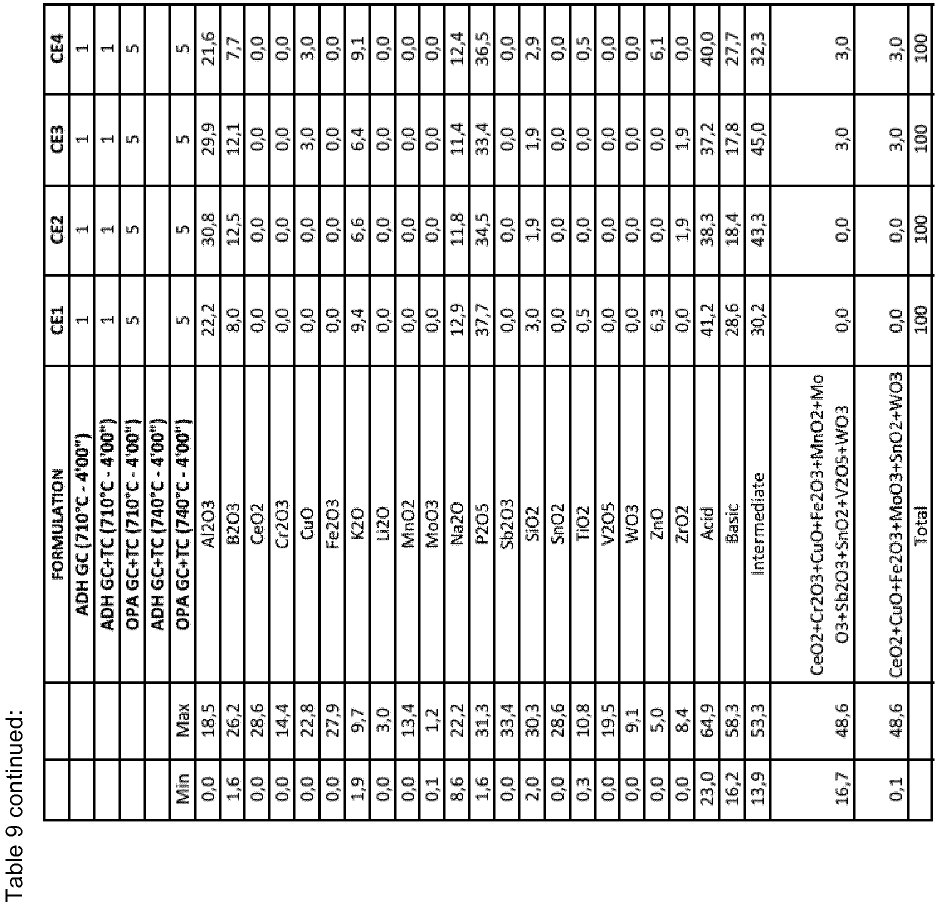

## Claims

1. Method for producing a metal coated steel substrate provided with a coating of a primer composition, comprising applying a layer of the primer composition on the metal coated steel substrate, wherein the primer composition comprises
- one or more basic components (B) selected from the group consisting of CuO, K₂O, Li₂O, Na₂O, CeO₂ and ZnO;
- one or more components with intermediate acidity (IN) selected from the group consisting of Al₂O₃, B₂O₃, Cr₂O₃, SnO₂ , Sb₂O₃ and Fe₂O₃;
- one or more acidic components (A) selected from the group consisting of MnO₂, MoO₃, P₂O5, SiO₂, TiO₂, V₂O5, WO₃ and ZrO₂; and
wherein all wt.% are drawn on the total primer composition and the total sum of the amounts excluding impurities and after normalization is 100 wt.%,
wherein all components are expressed as oxides, wherein the sum of the amounts of CeO₂ + Cr₂O₃+ CuO + Fe₂O₃+ MnO₂+ MoO₃+ SnO₂ + Sb₂O₃ + V₂O5 + WO₃ is between 18.9 and 48.6 wt.%, and wherein the sum of the amounts of CeO₂ + CuO + Fe₂O₃+ MoO₃+ SnO₂ + WO₃ is between 18.9 and 48.6 wt.%, and firing the metal coated substrate with the primer composition.

2. Method according to claim 1, wherein the primer composition does not contain more than 5 wt.% Sb₂O₃, preferably not more than 1 wt.% Sb₂O₃.

3. Method for producing an enamelled metal coated steel substrate, wherein the metal coated steel substrate produced by the method according to any one of claims 1 to 2 is vitrified by firing the layer of primer composition at a temperature in the range of 650 °C to 750 °C.

4. Method according to claims 1-3, further comprising the step of applying a layer of a topcoat composition on the primer composition

5. Method for producing an enamelled metal coated steel substrate, wherein the coated steel substrate produced by the method according to claim 4 is vitrified by firing the layer of topcoat composition at a temperature in the range of 650 °C to 750 °C.

6. Method according to any one of 1 to 5, wherein the layer of primer composition has a thickness of 3 to 120 µm.

7. Method according to claims 1-6, wherein in the primer composition, contains less than 0.1, preferably less than 0.05 wt.% of NiO and/or CoO.

8. Primer composition, comprising
- one or more basic components (B) selected from the group consisting of CuO, K₂O, Li₂O, Na₂O, CeO₂ and ZnO;
- one or more components with intermediate acidity (IN) selected from the group consisting of Al₂O₃, B₂O₃, Cr₂O₃, SnO₂ , Sb₂O₃ and Fe₂O₃;
- one or more acidic components (A) selected from the group consisting of MnO₂, MoO₃, P₂O5, SiO₂, TiO₂, V₂O5, WO₃ and ZrO₂; and
wherein all wt.% are drawn on the total primer composition and the total sum of the amounts excluding impurities and after normalization is 100 wt.%,
wherein all components are expressed as oxides, wherein the sum of the amounts of CeO₂ + Cr₂O₃+ CuO + Fe₂O₃+ MnO₂+ MoO₃+ SnO₂ + Sb₂O₃ + V₂O5 + WO₃ is between 18.9 and 48.6 wt.%, and wherein the sum of the amounts of CeO₂ + CuO + Fe₂O₃ + MoO₃ + SnO₂ + WO₃ is between 18.9 and 48.6 wt.%.

9. Primer composition according to claim 8 , wherein the primer composition does not contain more than 5 wt.% Sb₂O₃, preferably not more than 1 wt.% Sb₂O₃.

10. Use of a primer composition as defined in claims 8-9 for providing improved adherence and/or compatibility when applied to a metal coated steel substrate and vitrified at a temperature in the range of 650 to 750 °C.

11. Article comprising a metal coated steel substrate and the primer composition obtainable by the method of any one of claims 1 to 7.

12. Article comprising a metal coated steel substrate, and the vitrified primer composition obtainable by the method of any one of claims 1 to 7.

13. Article according to claim **11** further comprising a topcoat, preferably a white topcoat.

14. Article according to claim 11 or 12 , selected from the group consisting of white goods, brown goods, architectural structures and household appliances.

## Patentansprüche

1. Verfahren zur Herstellung eines metallbeschichteten Stahlsubstrats, das mit einer Beschichtung aus einer Grundierungszusammensetzung bereitgestellt ist, umfassend das Aufbringen einer Schicht aus der Grundierungszusammensetzung auf das metallbeschichtete Stahlsubstrat, wobei die Grundierungszusammensetzung umfasst
- eine oder mehrere basische Komponenten (B) ausgewählt aus der Gruppe bestehend aus CuO, K₂O, Li₂O, Na₂O, CeO₂ und ZnO;
- eine oder mehrere Komponenten mit intermediärer Acidität (IN) ausgewählt aus der Gruppe bestehend aus Al₂O₃, B₂O₃, Cr₂O₃, SnO₂, Sb₂O₃ und Fe₂O₃;
- eine oder mehrere saure Komponenten (A) ausgewählt aus der Gruppe bestehend aus MnO₂, MoO₃, P₂O5, SiO₂, TiO₂, V₂O5, WO₃ und ZrO₂; und
wobei alle Gew.-% auf die gesamte Grundierungszusammensetzung bezogen sind und die Gesamtsumme der Mengen ohne Verunreinigungen und nach Normalisierung 100 Gew.-% beträgt,
wobei alle Komponenten als Oxide ausgedrückt sind, wobei die Summe der Mengen von CeO₂ + Cr₂O₃ + CuO + Fe₂O₃ + MnO₂ + MoO₃ + SnO₂ + Sb₂O₃ + V₂O5 + WO₃ zwischen 18,9 und 48,6 Gew.-% liegt und wobei die Summe der Mengen von CeO₂ + CuO + Fe₂O₃ + MoO₃ + SnO₂ + WO₃ zwischen 18,9 und 48,6 Gew.-% liegt, und das Brennen des metallbeschichteten Substrats mit der Grundierungszusammensetzung.

2. Verfahren nach Anspruch 1, wobei die Grundierungszusammensetzung nicht mehr als 5 Gew.-% Sb₂O₃, vorzugsweise nicht mehr als 1 Gew.-% Sb₂O₃ enthält.

3. Verfahren zur Herstellung eines emaillierten metallbeschichteten Stahlsubstrats, wobei das metallbeschichtete Stahlsubstrat, das nach dem Verfahren nach einem der Ansprüche 1 bis 2 hergestellt ist, durch Brennen der Grundierungszusammensetzungssschicht bei einer Temperatur im Bereich von 650 °C bis 750 °C verglast wird.

4. Verfahren nach den Ansprüchen 1-3, weiter umfassend den Schritt des Aufbringens einer Schicht aus einer Deckschichtzusammensetzung auf die Grundierungszusammensetzung.

5. Verfahren zur Herstellung eines emaillierten metallbeschichteten Stahlsubstrats, wobei das beschichtete Stahlsubstrat, das nach dem Verfahren nach Anspruch 4 hergestellt ist, durch Brennen der Deckschichtzusammensetzungsschicht bei einer Temperatur im Bereich von 650 °C bis 750 °C verglast wird.

6. Verfahren nach einem der Ansprüche 1 bis 5, wobei die Grundierungszusammensetzungsschicht eine Dicke von 3 bis 120 µm aufweist.

7. Verfahren nach einem der Ansprüchen 1-6, wobei die Grundierungszusammensetzung weniger als 0,1, vorzugsweise weniger als 0,05 Gew.-% NiO und/oder CoO enthält.

8. Grundierungszusammensetzung, umfassend
- eine oder mehrere basische Komponenten (B) ausgewählt aus der Gruppe bestehend aus CuO, K₂O, Li₂O, Na₂O, CeO₂ und ZnO;
- eine oder mehrere Komponenten mit intermediärer Acidität (IN) ausgewählt aus der Gruppe bestehend aus Al₂O₃, B₂O₃, Cr₂O₃, SnO₂, Sb₂O₃ und Fe₂O₃;
- eine oder mehrere saure Komponenten (A) ausgewählt aus der Gruppe bestehend aus MnO₂, MoO₃, P₂O5, SiO₂, TiO₂, V₂O5, WO₃ und ZrO₂; und
wobei alle Gew.-% auf die gesamte Grundierungszusammensetzung bezogen sind und die Gesamtsumme der Mengen ohne Verunreinigungen und nach Normalisierung 100 Gew.-% beträgt,
wobei alle Komponenten als Oxide ausgedrückt sind, wobei die Summe der Mengen von CeO₂ + Cr₂O₃ + CuO + Fe₂O₃ + MnO₂ + MoO₃ + SnO₂ + Sb₂O₃ + V₂O5 + WO₃ zwischen 18,9 und 48,6 Gew.-% liegt und wobei die Summe der Mengen von CeO₂ + CuO + Fe₂O₃ + MoO₃ + SnO₂ + WO₃ zwischen 18,9 und 48,6 Gew.-% liegt.

9. Grundierungszusammensetzung nach Anspruch 8, wobei die Grundierungszusammensetzung nicht mehr als 5 Gew.-% Sb₂O₃, vorzugsweise nicht mehr als 1 Gew.-% Sb₂O₃ enthält.

10. Verwendung einer Grundierungszusammensetzung, wie in den Ansprüchen 8-9 definiert, zur Bereitstellung einer verbesserten Haftung und/oder Kompatibilität, wenn es auf ein metallbeschichtetes Stahlsubstrat aufgebracht wird und bei einer Temperatur im Bereich von 650 bis 750 °C verglast wird.

11. Artikel, umfassend ein metallbeschichtetes Stahlsubstrat und die Grundierungszusammensetzung, die durch das Verfahren nach einem der Ansprüche 1 bis 7 erhältlich ist.

12. Artikel, umfassend ein metallbeschichtetes Stahlsubstrat und die verglaste Grundierungszusammensetzung, die durch das Verfahren nach einem der Ansprüche 1 bis 7 erhältlich ist.

13. Artikel nach Anspruch 11, weiter umfassend eine Deckschicht, vorzugsweise eine weiße Deckschicht.

14. Artikel nach Anspruch 11 oder 12, ausgewählt aus der Gruppe bestehend aus weißer Ware, brauner Ware, architektonischen Gebilden und Haushaltsgeräten.

## Revendications

1. Procédé de production d'un substrat en acier revêtu de métal pourvu d'un revêtement d'une composition primaire, comprenant l'application d'une couche de la composition primaire sur le substrat en acier revêtu de métal, dans lequel la composition primaire comprend :
- un ou plusieurs composants de base (B) choisis parmi le groupe constitué de CuO, K₂O, Li₂O, Na₂O, CeO₂ et ZnO;
- un ou plusieurs composants d'acidité intermédiaire (IN) choisis dans le groupe constitué de Al₂O₃, B₂O₃, Cr₂O₃, SnO₂, Sb₂O₃ et Fe₂O₃;
- un ou plusieurs composants acides (A) choisis dans le groupe constitué de MnO₂, MoO₃, P₂O₅, SiO₂, TiO₂, V₂O₅, WO₃ et ZrO₂, et dans lequel tous les % en poids sont utilisés pour la composition primaire totale et pour la somme totale des quantités excluant les impuretés et après normalisation à 100% en poids,
dans lequel tous les composants sont exprimés en oxydes, dans lequel la somme des quantités de CeO₂ + Cr₂O₃ + CuO + Fe₂O₃ + MnO₂ + MoO₃ + SnO₂ + Sb₂O₃ + V₂O₅ + WO₃ est comprise entre 18,9% et 48,6 % en poids, et dans laquelle la somme des quantités de CeO₂+ CuO + Fe₂O₃+ MoO₃ + SnO₂ + WO₃ est comprise entre 18,9% et 48,6 % en poids, et cuire le substrat revêtu de métal avec la composition primaire.

2. Procédé selon la revendication 1, dans lequel la composition primaire ne contient pas plus de 5% en poids de Sb₂O₃, de préférence pas plus de 1% en poids de Sb₂O₃.

3. Procédé de production d'un substrat en acier recouvert de métal émaillé, dans lequel le substrat en acier revêtu de métal produit par le procédé selon l'une quelconque des revendications 1 à 2 est vitrifié par cuisson de la couche de composition primaire à une température comprise entre 650°C et 750°C.

4. Procédé selon les revendications 1 à 3, comprenant en outre l'étape consistant à appliquer une couche d'une composition de couche de finition sur la composition primaire.

5. Procédé pour produire un substrat en acier recouvert de métal émaillé, dans lequel le substrat en acier recouvert produit par le procédé selon la revendication 4 est vitrifié par cuisson de la couche de composition de couche de finition à une température comprise entre 650°C et 750°C.

6. Procédé selon l'un quelconque des revendications 1 à 5, dans lequel la couche de composition primaire a une épaisseur de 3 à 120 µm.

7. Procédé selon les revendications 1 à 6, dans lequel, dans la composition primaire, contient moins de 0,1% de préférence moins de 0,05% en poids de NiO et/ou de CoO.

8. Composition primaire, comprenant,
- un ou plusieurs composants de base (B) choisi dans le groupe constitué de CuO, K₂O, Li₂O, Na₂O, CeO₂ et ZnO;
- un ou plusieurs composants d'acidité intermédiaire (IN) choisis dans le groupe constitué de Al₂O₃, B₂O₃, Cr₂O₃, SnO₂, Sb₂O₃ et Fe₂O₃;
- un ou plusieurs composants acides (A) choisis dans le groupe constitué de MnO₂, MoO₃, P₂O5, SiO₂, TiO₂, V₂O5, WO₃ et ZrO₂, et
dans lequel tous les % en poids sont utilisés pour la composition primaire totale et pour la somme totale des quantités excluant les impuretés et après normalisation à 100% en poids, dans lequel tous les composants sont exprimés en oxydes, dans lequel la somme des quantités de CeO₂ + Cr₂O₃ + CuO + Fe₂O₃ + MnO₂ + MoO₃ + SnO₂ + Sb₂O₃ + V₂O₅ + WO₃ est comprise entre 18,9% et 48,6 % en poids et dans laquelle la somme des quantités de CeO₂+ CuO + Fe₂O₃+ MoO₃ + SnO₂ + WO₃ est comprise entre 18,9% et 48,6 % en poids.

9. Composition primaire selon la revendication 8, dans laquelle la composition primaire ne contient pas plus de 5% en poids de Sb₂O₃, de préférence pas plus de 1% en poids de Sb₂O₃.

10. Utilisation d'une composition primaire telle que définie dans les revendications 8 à 9 pour améliorer l'adhérence et/ou la compatibilité lors de son application sur un substrat en acier recouvert de métal et vitrifié à une température comprise entre 650°C et 750°C.

11. Objet comprenant un substrat en acier recouvert de métal et la composition primaire pouvant être obtenue par le procédé selon l'une quelconque des revendications 1 à 7.

12. Objet comprenant un substrat en acier recouvert de métal et la composition primaire vitrifiée pouvant être obtenue par le procédé selon l'une quelconque des revendications 1 à 7.

13. Objet selon la revendication 11, comprenant en outre une couche de finition, de préférence une couche de finition blanche.

14. Objet selon la revendication 11 ou la revendication 12, choisi dans le groupe comprenant les produits blancs, les produits bruns, les structures architecturales et les appareils ménagers.
